# EUROPÄISCHE PATENTSCHRIFT

(11) **EP 2 787 214 B1**
(45) Veröffentlichungstag und Bekanntmachung des Hinweises auf die Patenterteilung: **11.04.2018**
(21) Anmeldenummer: 14156488.0
(22) Anmeldetag: 25.02.2014
(51) Int. Cl.: F02M 43/02, F02M 25/03

(54) **Kraftstoffpumpensystem**
Fuel pump system
Système de pompage de carburant

(30) Priorität: 02.04.2013 DE 102013205774
(43) Veröffentlichungstag der Anmeldung: 08.10.2014
(73) Patentinhaber: Bayerische Motoren Werke Aktiengesellschaft, 80809 München (DE)
(72) Erfinder: Dr.Albertz, Frank, 85391 Allershausen (DE); Dr.Bartelt, Hans-Christian, 80807 München (DE); Freund, Henryk, 85570 Markt Schwaben (DE)

(56) Entgegenhaltungen:
- EP-A1- 2 055 926
- CA-A1- 2 758 246
- DE-A1- 4 040 235
- US-A- 3 215 080

## Beschreibung

Die Erfindung betrifft ein Kraftstoffpumpensystem zum Einspritzen eines Kraftstoffs in eine Brennkammer einer Verbrennungskraftmaschine, mit einer durch einen Pumpenantrieb betätigbaren Pumpe, die den Kraftstoff als erste Einspritzflüssigkeit in einem ersten Flüssigkeitszweig in Form eines Kraftstoffzweigs von einem ersten Niederdruckanschluss zu einem ersten Hochdruckanschluss fördert.

Das direkte Einspritzen von Kraftstoff ist seit einigen Jahren beim Betrieb von Verbrennungskraftmaschinen verbreitet, insbesondere bei Ottomotoren in Personenkraftwagen.

Es ist bekannt, dass das Verbrennungsverhalten des Kraftstoffs in der Verbrennungskraftmaschine günstig beeinflusst werden kann, indem eine weitere Flüssigkeit zusätzlich zum Kraftstoff z.B. in die Brennkammer selbst oder in das Saugrohr vor der Brennkammer eingespritzt wird. Als zweite Einspritzflüssigkeit kommt etwa Wasser, ein Wasser-Kraftstoffgemisch oder ein Wasser-Alkoholgemisch infrage. Durch eine derartige Beimischung kann beispielsweise eine Kühlwirkung hervorgerufen werden. Insgesamt hat sich herausgestellt, dass sich in einigen Kennfeldbereichen der Verbrennungskraftmaschine eine Kraftstoffersparnis bzw. eine Verringerung der Schadstoffe im Abgas erreichen lässt.

In der CA 2 758 246 A1 ist ein Kraftstoffpumpensystem beschrieben, bei dem der in einen Hochdruckzweig geförderte Kraftstoff als Hydraulikflüssigkeit zur Förderung eines zweiten, gasförmigen Treibstoffs genutzt wird.

Die US 3,215,080 A zeigt ein Kraftstoffpumpensystem, bei dem ein Hilfskolben durch den geförderten Treibstoff hin und her bewegt wird, um eine zweite Flüssigkeit zu fördern.

Die DE 40 40 235 A1 zeigt ein Kraftstoffpumpensystem mit einem Trennkolben, der hydraulisch über den geförderten Kraftstoff bewegt wird, um ein Kraftstoff-Wasser-Gemisch zu fördern, wobei ein Absperrventil im Niederdruckzweig vor einem Arbeitsraum eines mit einer Nockenwelle verbundenen Pumpenkolben angeordnet ist. Der Arbeitsraum wird durch den Trennkolben begrenzt.

Aufgabe der Erfindung ist es, das Einspritzen einer weiteren Flüssigkeit im Bereich der Brennkammer kostengünstig und zuverlässig mit möglichst geringem Bauraumbedarf zu ermöglichen.

Erfindungsgemäß ist zu diesem Zweck ein Kraftstoffpumpensystem mit den Merkmalen des Anspruchs 1 vorgesehen. Erfindungsgemäß wird also die Pumpwirkung der Hochdruckkraftstoffpumpe, die den eigentlichen Kraftstoff zur direkten Einspritzung in die Brennkammer auf das erforderliche Druckniveau fördert, in einer zweiten Funktion ausgenutzt, um zusätzlich zum Kraftstoff eine zweite Einspritzflüssigkeit unter Druck bereitzustellen. Der von der Pumpe erzeugte Druckunterschied wird durch die Kopplung mit der Verdrängereinheit ausgenutzt, um die zweite Einspritzflüssigkeit auf ein gewünschtes hohes Druckniveau zu bringen.

Der Antrieb der den Kraftstoff fördernden Pumpe stellt so letztendlich auch die Förderenergie für die zweite Einspritzflüssigkeit zur Verfügung, sodass die Verdrängereinheit ohne eigenen separaten Antrieb auskommt. Infolgedessen können gegenüber der Verwendung einer separaten zusätzlichen Pumpe Bauraum sowie mechanisch störungsanfällige Teile eingespart werden.

Die Kopplung der Pumpe mit der Verdrängereinheit erfolgt vorzugsweise rein fluidmechanisch ohne eine mechanische Kraftübertragung. Die Verdrängereinheit wird lediglich über die durch die Pumpe zwischen dem Niederdruckanschluss und dem ersten Hochdruckanschluss bereitgestellte Druckdifferenz betrieben.

Die zweite Einspritzflüssigkeit ist bevorzugt reines Wasser, kann aber auch eine andere Flüssigkeit, etwa ein Wasser-Alkoholgemisch, sein.

Das Druckniveau, auf das die zweite Einspritzflüssigkeit gefördert wird, kann niedriger sein als das der Hochdruckseite des Kraftstoffzweigs, es kann aber auch denselben Wert annehmen.

Die Verdrängereinheit weist ein Verdrängerelement auf, das zwei Druckräume fluiddicht voneinander trennt, wobei der erste Druckraum mit dem Kraftstoffzweig in Strömungsverbindung steht und der zweite Druckraum mit dem zweiten Flüssigkeitszweig mit der zweiten Einspritzflüssigkeit in Strömungsverbindung steht. Die beiden Flüssigkeiten sind stets stofflich voneinander getrennt und werden nicht miteinander vermischt.

Über die Strömungsverbindung des ersten Druckraums mit dem Kraftstoffzweig lassen sich dessen Druckunterschiede zwischen der Hochdruck- und der Niederdruckseite der Kraftstoffpumpe ausnutzen, um das Verdrängerelement zu bewegen und somit eine Volumenänderung im zweiten Druckraum hervorzurufen. Diese Volumenänderung wird genutzt, um die zweite Einspritzflüssigkeit im zweiten Flüssigkeitszweig von dessen Niederdruck- zu dessen Hochdruckanschluss zu fördern.

Die Verdrängereinheit ist eine Zylinder-/Kolbeneinheit mit einem im Zylinder entlang einer Zylinderachse verschiebbaren Kolben, der die beiden Druckräume voneinander trennt. Derartige Einheiten sind gut in Hochdruckanwendungen einsetzbar, da sie wenig störungsanfällig sind und kostengünstig in verschiedensten Größen hergestellt werden können.

Der Kolben der Zylinder-/Kolbeneinheit ist vorzugsweise im Zylinder frei verschieblich, sodass er insbesondere jede Position im Zylinder einnehmen kann.

Gemäß einer nicht beanspruchten Alternative ist es jedoch auch möglich, einen anderen Typ von Verdrängereinheit zu verwenden, beispielsweise mit einer Membran als Verdrängerelement, die die beiden Druckräume voneinander trennt.

Um den ersten Druckraum mit verschiedenen Drücken beaufschlagen zu können, ist zwischen dem ersten Druckraum der Verdrängereinheit und dem Kraftstoffzweig ein schaltbares Ventil, insbesondere ein Magnetventil, angeordnet, das wechselweise mit dem ersten Hochdruckanschluss und dem ersten Niederdruckanschluss verbindbar ist.

Ist das Ventil so geschaltet, dass der erste Druckraum in Strömungsverbindung mit dem ersten Hochdruckanschluss steht, strömt Kraftstoff mit dem hohen Druck der Hochdruckseite in den ersten Druckraum ein und bewegt das Verdrängerelement in Richtung zum zweiten Druckraum. Vorzugsweise werden zur Erzeugung eines möglichst großen Förderhubs die Druckverhältnisse so gewählt, dass der zweite Druckraum maximal entleert und der erste Druckraum maximal befüllt wird.

Wird das Ventil umgeschaltet, sodass der erste Druckraum strömungsmäßig mit dem Niederdruckanschluss des Kraftstoffzweigs verbunden ist, so entleert sich der erste Druckraum wieder, da das Verdrängerelement sich vom zweiten Druckraum weg bewegt, und der Kraftstoff fließt aus dem ersten Druckraum auf die Niederdruckseite des Kraftstoffzweigs ab. Von dort wird er erneut mit der Kraftstoffpumpe auf die Hochdruckseite gefördert.

Das Ventil ist vorzugsweise mit einer Steuereinheit verbunden, die das Schalten des Ventils steuert. Die Steuereinheit sorgt somit auch für die Taktung der Verdrängereinheit, wobei diese unabhängig vom Takt der Kraftstoffpumpe gewählt werden kann.

Über die Steuereinheit lässt sich auch auf einfache Weise die Verdrängereinheit ab- oder zuschalten, beispielsweise in bestimmten Fahrsituationen oder in bestimmten Kennfeldbereichen der Motorleistung, in denen eine zusätzliche Wassereinspritzung keine Vorteile bringt. Genauso kann die Steuereinheit die Verdrängereinheit abschalten, wenn beispielsweise das Reservoir der zweiten Flüssigkeit leer ist oder ungünstige Witterungsbedingungen herrschen, beispielsweise beim Starten der Verbrennungskraftmaschine bei tiefen Temperaturen. Deshalb ist die Steuereinheit vorzugsweise mit der Motorelektronik oder anderen Elektronikeinheiten des Fahrzeugs verbunden.

Das Ventil kann in die Verdrängereinheit integriert sein, es können aber abhängig von der im Fahrzeug gegebenen Einbausituation auch räumlich getrennte Bauteile eingesetzt werden.

Im zweiten Flüssigkeitszweig ist vorzugsweise der zweite Druckraum mit einem Anschluss zwischen dem zweiten Hochdruck- und dem zweiten Niederdruckanschluss verbunden.

Der Anschluss ist bevorzugt zwischen zwei nur in Förderrichtung durchlässigen Ventilen angeordnet, beispielsweise zwei entgegen der Förderrichtung sperrenden Rückschlagventilen, die ohne eine eigene Ventilsteuerung auskommen. Auf diese Weise ist die Förderrichtung klar vorgegeben, und es ist auf einfache Weise sichergestellt, dass beim Entleeren des zweiten Druckraums durch Füllen des ersten Druckraums die zweite Einspritzflüssigkeit auf die Hochdruckseite des zweiten Flüssigkeitszweigs gefördert wird, während beim Leeren des ersten Druckraums zweite Einspritzflüssigkeit von der Niederdruckseite des zweiten Flüssigkeitszweigs in den zweiten Druckraum nachströmt.

Zur Unterstützung der Bewegung des Verdrängerelements kann im zweiten Druckraum ein Rückstellelement vorgesehen sein, das das Verdrängerelement in Richtung zum ersten Druckraum beaufschlagt und somit das Einströmen der zweiten Einspritzflüssigkeit in den zweiten Druckraum unterstützt. Das Rückstellelement ist vorzugsweise eine Feder, wobei die Federkraft größer gewählt ist als der Kraftstoffniederdruck, sodass auch bei einem geringer gewählten Niederdruck im zweiten Flüssigkeitszweig auf jeden Fall das Verdrängerelement den ersten Druckraum maximal leeren kann. Durch Verwendung eines Rückstellelements kann eine Absenkung des notwendigen Vorlaufdrucks der zweiten Einspritzflüssigkeit bewirkt werden. Gegebenenfalls reicht dann bereits ein unter Atmosphärendruck stehendes Reservoir der zweiten Einspritzflüssigkeit zur Bereitstellung des notwendigen Vorlaufdrucks aus.

Wenn standardmäßig der Druck auf der Niederdruckseite des zweiten Flüssigkeitszweigs größer gewählt ist als der Druck auf der Niederdruckseite des Kraftstoffzweigs, kann auch auf das Rückstellelement verzichtet werden, da dann der am Verdrängerelement anliegende Druckunterschied ausreicht, um das Verdrängerelement zu bewegen.

Andererseits ist der Druck auf der Kraftstoffhochdruckseite vorzugsweise höher gewählt als auf der Hochdruckseite des zweiten Flüssigkeitszweigs, um eine Bewegung des Verdrängerelements zum Fördern der zweiten Einspritzflüssigkeit sicherzustellen. Auch hier ist es möglich, eine unterstützende Feder vorzusehen.

Um die in den beiden Druckräumen auf das Verdrängerelement wirkenden Drücke in Abhängigkeit des jeweiligen Systems und der jeweiligen gewünschten Flüssigkeitsdrücke anzupassen, kann auch der Querschnitt des Verdrängerelements im ersten und im zweiten Druckraum unterschiedlich gestaltet werden. Dies ist besonders einfach, wenn das Verdrängerelement ein Kolben ist.

In einer möglichen Betriebsweise des Kraftstoffpumpensystems fördert die Kraftstoffpumpe Im Normalbetrieb Kraftstoff vom ersten Niederdruckanschluss zum ersten Hochdruckanschluss und schafft so ein Druckgefälle. Die Steuereinheit steuert das Ventil so an, dass in einem ersten Betriebszustand der erste Druckraum mit dem Hochdruckanschluss des Kraftstoffzweigs verbunden ist, sodass Kraftstoff unter hohem Druck in den ersten Druckraum einfließt und das Verdrängerelement in Richtung zum zweiten Druckraum bewegt. Durch diese Bewegung des Verdrängerelements wird die im zweiten Druckraum vorhandene zweite Einspritzflüssigkeit aus dem zweiten Druckraum herausgepresst und über das in Strömungsrichtung durchlässige Ventil auf die Hochdruckseite zum zweiten Hochdruckanschluss im zweiten Flüssigkeitszweig gefördert. Nun schaltet das Ventil um, sodass der erste Druckraum mit dem ersten Niederdruckanschluss des Kraftstoffzweigs verbunden ist. Der am zweiten Druckraum anstehende Druck der zweiten Einspritzflüssigkeit, erzeugt durch die von der Niederdruckseite des zweiten Flüssigkeitszweigs durch das zweite Rückschlagventil nachströmende zweite Einspritzflüssigkeit ist größer als der Druck auf der Niederdruckseite des Kraftstoffzweigs, sodass zweite Einspritzflüssigkeit in den zweiten Druckraum einströmt und das Verdrängerelement, eventuell unterstützt von einer Rückstellfeder, in Richtung zum ersten Druckraum verschiebt. Hierdurch wird der Kraftstoff aus dem ersten Druckraum hinausgedrückt und fließt durch das Ventil auf die Niederdruckseite des Kraftstoffzweigs ab. Dieser Prozess wird im Takt der durch die Steuereinheit vorgegebenen Schaltung des Ventils wiederholt.

Zur Erhöhung der Fördermenge und um Druckschwankungen und -pulse zu minimieren, können mehrere Verdrängereinheiten parallel geschaltet mit dem Kraftstoffzweig sowie dem zweiten Flüssigkeitszweig verbunden sein.

Die Pumpe im Kraftstoffzweig ist vorzugsweise eine Kolbenpumpe und der Pumpenantrieb ist ein Nockenantrieb, der vorzugsweise über die normale Nockenwelle der Verbrennungskraftmaschine angetrieben wird.

Da die Druckänderung im ersten Druckraum abhängig vom Schalten des Ventils ist, wäre es auch möglich, anstatt einer diskontinuierlich arbeitenden Kraftstoffhochdruckpumpe eine kontinuierlich arbeitende Pumpe im Kraftstoffzweig einzusetzen.

Die Erfindung ist hier im Zusammenhang mit Benzin verbrennenden Ottomotoren beschrieben, lässt sich aber auch auf andere Verbrennungskraftmaschinen übertragen.

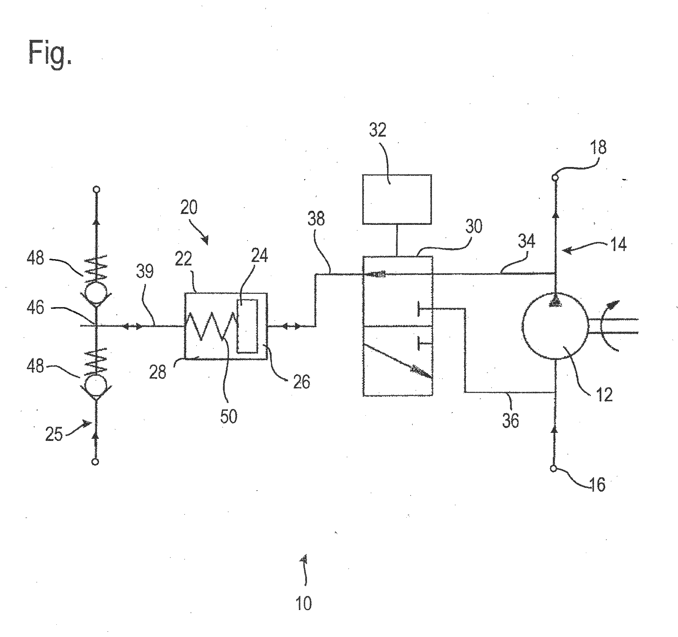

Die Erfindung wird nachfolgend anhand eines Ausführungsbeispiels mit Bezug auf die beigefügte Zeichnung näher beschrieben. Die einzige Figur zeigt ein schematisches Hydraulik-Schaltbild eines erfindungsgemäßen Kraftstoffpumpensystems.

Das in der Figur dargestellte Kraftstoffpumpensystem 10 umfasst eine Pumpe 12, die in einem Kraftstoffzweig 14 einen Kraftstoff von einem ersten Niederdruckanschluss 16 zu einem ersten Hochdruckanschluss 18 fördert.

Die Pumpe 12 ist hier eine konventionelle Hochdruckkraftstoffpumpe für eine Verbrennungskraftmaschine, beispielsweise einen Ottomotor. Der Kraftstoff ist insbesondere Benzin. Im hier beschriebenen Beispiel ist die Pumpe 12 eine an sich bekannte, nicht näher dargestellte Kolbenpumpe, die von der Nockenwelle der Verbrennungskraftmaschine angetrieben wird.

Das Druckniveau auf der Hochdruckseite nach der Pumpe 12 am Hochdruckanschluss kann z.B. bei etwa 200 bis 250 bar liegen. Der Kraftstoff wird auf bekannte Weise einer Direkteinspritzung zugeführt, die den Kraftstoff in die Brennkammern der Zylinder der Verbrennungskraftmaschine einspritzt.

Eine Verdrängereinheit 20, hier in Form einer Zylinder-/Kolbeneinheit mit einem starren Zylinder 22 und einem starren, in Axialrichtung im Zylinder 22 frei beweglich aufgenommenen Kolben, der ein Verdrängerelement 24 der Verdrängereinheit 20 bildet, ist strömungsmäßig mit dem Kraftstoffzweig 14 und einem zweiten Flüssigkeitszweig 25 verbunden.

Die Verdrängereinheit 20 ist durch das Verdrängerelement 24 in zwei fluiddicht voneinander getrennte Druckräume 26, 28 unterteilt.

Der erste Druckraum 26 steht über ein zwischen den Kraftstoffzweig 14 und den ersten Druckraum 26 zwischengeschaltetes Ventil 30 in Strömungsverbindung mit dem Kraftstoffzweig 14. Das Ventil 30 wird von einer Steuereinheit 32 in zwei verschiedene Zustände geschaltet.

Das Ventil 30 ist einerseits über eine erste Leitung 34 mit dem ersten Hochdruckanschluss 18 im Kraftstoffzweig und andererseits über eine zweite Leitung 36 mit dem ersten Niederdruckanschluss 16 im Kraftstoffzweig 14 strömungsmäßig verbunden. Eine einzelne Leitung 38 führt vom Ventil 30 zum ersten Druckraum 26 der Verdrängereinheit 20. Die Steuereinheit 32 kann somit das Ventil 30 wechselweise so schalten, dass der hohe Druck des Kraftstoffzweigs 14 oder der Niederdruck des Kraftstoffzweigs 14 am ersten Druckraum 26 anliegt.

Der zweite Druckraum 28 steht über eine einzelne Leitung 39 in Strömungsverbindung mit dem zweiten Flüssigkeitszweig 25, in dem eine zweite Einspritzflüssigkeit von einem zweiten Niederdruckanschluss 42 zu einem zweiten Hochdruckanschluss 44 gefördert wird. Die Leitung 39 mündet in einem Anschluss 46 zwischen den beiden Anschlüssen 42, 44.

Stromabwärts und stromaufwärts des Anschlusses 46 ist jeweils vor dem zweiten Niederdruckanschluss 42 bzw. dem zweiten Hochdruckanschluss 44 ein nur in Förderrichtung (siehe Pfeile) durchlässiges Ventil 48 angeordnet. Die beiden Ventile 48 sind hier als einfaches Rückschlagventil ausgeführt.

Zur Unterstützung der Rückbewegung des Verdrängerelements 24 ist ein Rückstellelement 50 im zweiten Druckraum 28 angeordnet, hier in Form einer Feder, das das Verdrängerelement 24 in Richtung zum ersten Druckraum 26 hin beaufschlagt.

Die Steuereinheit 32 schaltet das Ventil so, dass abwechselnd die Leitung 34 und die Leitung 36 mit dem ersten Druckraum 26 verbunden ist.

Ist die Leitung 34 in Strömungsverbindung mit dem ersten Druckraum 26, so strömt Kraftstoff von der Hochdruckseite des Kraftstoffzweigs 14 unter hohem Druck in den ersten Druckraum 26 ein und verschiebt dabei das Verdrängerelement 24 in Richtung zum zweiten Druckraum 28. Dabei wird das dort befindliche Volumen an zweiter Einspritzflüssigkeit vorzugsweise vollständig aus dem zweiten Druckraum 28 verdrängt und durch das stromaufwärts des Anschlusses 46 der Leitung 39 gelegene Ventil 48 in Richtung des zweiten Hochdruckanschlusses 44 des zweiten Flüssigkeitszweigs 25 gefördert.

Schaltet nun die Steuereinheit 32 das Ventil 30 so, dass die Leitung 36 in Strömungsverbindung mit dem ersten Druckraum 26 kommt, so ist der erste Druckraum mit der Niederdruckseite des Kraftstoffzweigs 14 und dem Niederdruckanschluss 16 verbunden. Die Druckverhältnisse und/oder die geometrischen Verhältnisse in der Verdrängereinheit 20, insbesondere die Querschnitte des Verdrängerelements 24 in den beiden Druckräumen 26, 28, sind so gewählt, dass, eventuell mit Unterstützung des Rückstellelements 50, die auf das Verdrängerelement 24 in Richtung des ersten Druckraums 26 einwirkende Kraft ausreicht, um das Verdrängerelement 24 in Richtung zum ersten Druckraum 26 hin zu bewegen und diesen vorzugsweise vollständig zu entleeren. Der aus dem ersten Druckraum 26 verdrängte Kraftstoff fließt über die Leitung 36 in Richtung des ersten Niederdruckanschlusses 16 im Kraftstoffzweig 14 ab.

Gleichzeitig füllt nachströmende zweite Einspritzflüssigkeit aus dem zweiten Flüssigkeitszweig 25, die durch das stromaufwärts des Anschlusses 46 gelegene Ventil 48 nachströmt, den zweiten Druckraum 28.

Zur Wiederholung des Zyklus schaltet nun die Steuereinheit 32 das Ventil 30 wieder um, sodass die Leitung 34 mit dem ersten Druckraum 26 verbunden ist und Kraftstoff von der Hochdruckseite des Kraftstoffzweigs 14 in den ersten Druckraum 26 einströmt.

Durch die beschriebene fluidmechanische Kopplung mit der Verdrängereinheit 20 fördert die Pumpe 12 nicht nur Kraftstoff vom Niederdruckanschluss 16 zum ersten Hochdruckanschluss 18, sondern auch zweite Einspritzflüssigkeit im zweiten Flüssigkeitszweig 25 vom zweiten Niederdruckanschluss 42 zum zweiten Hochdruckanschluss 44.

Die Taktung der Verdrängereinheit 20 erfolgt vollständig über das Ventil 30 und die Steuereinheit 32, da der Schaltzyklus des Ventils 30 das Befüllen und Entleeren des ersten Druckraums 26 bestimmt. Diese Taktung ist unabhängig von der Taktung der Pumpe 12.

Die Verdrängereinheit 20 arbeitet als dabei als Drucküberträger und nutzt die Antriebsenergie des Antriebs der Pumpe 12, um über eine fluidmechanische, hydraulische Kopplung die zweite Einspritzflüssigkeit im zweiten Flüssigkeitszweig 25 zu fördern.

In diesem Beispiel ist die Verdrängereinheit 20 nur hydraulisch mit der Pumpe 12 verbunden, es besteht keine direkte mechanische Verbindung.

Die im zweiten Flüssigkeitszweig 25 geförderte zweite Einspritzflüssigkeit ist vorzugsweise Wasser, könnte aber auch eine andere Flüssigkeit sein, beispielsweise ein Wasser-Alkoholgemisch.

Vom zweiten Hochdruckanschluss 44 aus wird die zweite Einspritzflüssigkeit beispielsweise zusammen mit dem vom ersten Hochdruckanschluss 18 gelieferten Kraftstoff direkt in die Brennkammern der Verbrennungskraftmaschine eingespritzt. Es ist aber auch möglich, die zweite Einspritzflüssigkeit an anderer Stelle in der Verbrennungskraftmaschine einzuspritzen, beispielsweise in einem Saugrohr.

Es wäre möglich, mehrere Verdrängereinheiten 20, jeweils mit zugehörigem Ventil 30, parallel zueinander zwischen dem Kraftstoffzweig 14 und dem zweiten Flüssigkeitszweig 25 anzuordnen. Die Steuereinheit 32 könnte in diesem Fall die Schaltung sämtlicher Ventile 30 übernehmen und diese z.B. gestaffelt betätigen, um Druckpulse im Kraftstoffzweig 14 oder im zweiten Flüssigkeitszweig 25 zu reduzieren.

## Patentansprüche

1. Kraftstoffpumpensystem zum Einspritzen eines Kraftstoffs in eine Brennkammer einer Verbrennungskraftmaschine, mit
einer durch einen Pumpenantrieb betätigbaren Pumpe (12), die den Kraftstoff als erste Einspritzflüssigkeit in einem ersten Flüssigkeitszweig in Form eines Kraftstoffzweigs (14) von einem ersten Niederdruckanschluss (16) zu einem ersten Hochdruckanschluss (18) fördert,
wobei die Pumpe (12) mit einer strömungsmäßig mit einem zweiten Flüssigkeitszweig (25) verbundenen Verdrängereinheit (20) gekoppelt ist, sodass die Pumpe (12) über die Verdrängereinheit (20) im zweiten Flüssigkeitszweig (25) eine zweite Einspritzflüssigkeit von einem zweiten Niederdruckanschluss (42) zu einem zweiten Hochdruckanschluss (44) fördert, und
wobei die Verdrängereinheit (20) ein Verdrängerelement (24) aufweist, das zwei Druckräume (26, 28) fluiddicht voneinander trennt, wobei der erste Druckraum (26) mit dem Kraftstoffzweig (14) in Strömungsverbindung steht und der zweite Druckraum (28) mit dem zweiten Flüssigkeitszweig (25) in Strömungsverbindung steht und die Verdrängereinheit (20) eine Zylinder-/Kolbeneinheit mit einem im Zylinder (22) entlang einer Zylinderachse verschiebbaren Kolben ist, der die Druckräume (26, 28) voneinander trennt und wobei zwischen dem ersten Druckraum (26) der Verdrängereinheit (20) und dem Kraftstoffzweig (14) ein schaltbares Ventil (30) angeordnet ist, das wechselweise mit dem ersten Hochdruckanschluss (18) und dem ersten Niederdruckanschluss (16) verbindbar ist.

2. Kraftstoffpumpensystem nach Anspruch 14, **dadurch gekennzeichnet, dass** das Ventil (30) mit einer Steuereinheit (32) verbunden ist, die das Schalten des Ventils (30) steuert.

3. Kraftstoffpumpensystem nach einem der vorhergehenden Ansprüche, **dadurch gekennzeichnet, dass** der zweite Druckraum (28) mit dem zweiten Flüssigkeitszweig (25) an einem Anschluss (46) zwischen dem zweiten Hochdruck- und dem zweiten Niederdruckanschluss (44, 42) des zweiten Flüssigkeitszweigs (25) verbunden ist.

4. Kraftstoffpumpensystem nach Anspruch 3, **dadurch gekennzeichnet, dass** der Anschluss (46) zwischen zwei in Förderrichtung durchlässigen Ventilen (48) angeordnet ist.

5. Kraftstoffpumpensystem nach einem der vorhergehenden Ansprüche, **dadurch gekennzeichnet, dass** im zweiten Druckraum (28) ein Rückstellelement (50) vorgesehen ist, dass das Verdrängerelement (24) in Richtung zum ersten Druckraum (26) beaufschlagt.

6. Kraftstoffpumpensystem nach einem der vorhergehenden Ansprüche, **dadurch gekennzeichnet, dass** der Querschnitt des Verdrängerelements (24) im ersten und im zweiten Druckraum (26, 28) unterschiedlich ist.

7. Kraftstoffpumpensystem nach einem der vorhergehenden Ansprüche, **dadurch gekennzeichnet, dass** mehrere Verdrängereinheiten (20) parallel geschaltet mit dem Kraftstoffzweig (14) sowie dem zweiten Flüssigkeitszweig (25) verbunden sind.

8. Kraftstoffpumpensystem nach einem der vorhergehenden Ansprüche, **dadurch gekennzeichnet, dass** die Pumpe (12) eine Kolbenpumpe und der Pumpenantrieb ein Nockenantrieb ist.

## Claims

1. A fuel pump system for injecting a fuel into a combustion chamber of an internal combustion engine, having
a pump (12), which can be actuated by a pump drive and which conveys the fuel as first injection liquid in a first liquid branch in the form of a fuel branch (14) from a first low-pressure connection (16) to a first high-pressure connection (18),
wherein the pump (12) is coupled with a displacement unit (20) which is fluidically connected to a second liquid branch (25), so that the pump (12) via the displacement unit (20) in the second liquid branch (25) conveys a second injection liquid from a second low-pressure connection (42) to a second high-pressure connection (44), and
wherein the displacement unit (20) has a displacement element (24) which separates two pressure spaces (26, 28) from each other in fluid-tight manner, wherein the first pressure space (26) is in a flow connection with the fuel branch (14) and the second pressure space (28) is in a flow connection with the second liquid branch (25),
and the displacement unit (20) is a cylinder/piston unit with a piston which is displaceable in the cylinder (22) along a cylinder axis, which piston separates the pressure spaces (26, 28) from each other, and
wherein a switchable valve (30) is arranged between the first pressure space (26) of the displacement unit (20) and the fuel branch (14), which valve can be connected alternately to the first high-pressure connection (18) and the first low-pressure connection (16).

2. A fuel pump system according to Claim 1, **characterised in that** the valve (30) is connected to a control unit (32) which controls the switching of the valve (30).

3. A fuel pump system according to one of the preceding claims, **characterised in that** the second pressure space (28) with the second liquid branch (25) is connected to a connection (46) between the second high-pressure connection and the second low-pressure connection (44, 42) of the second liquid branch (25).

4. A fuel pump system according to Claim 3, **characterised in that** the connection (46) is arranged between two valves (48) which are conducting in the direction of conveyance.

5. A fuel pump system according to one of the preceding claims, **characterised in that** a restoring element (50) which acts upon the displacement element (24) in the direction of the first pressure space (26) is provided in the second pressure space (28).

6. A fuel pump system according to one of the preceding claims, **characterised in that** the cross-section of the displacement element (24) in the first and in the second pressure space (26, 28) is different.

7. A fuel pump system according to one of the preceding claims, **characterised in that** a plurality of displacement units (20) are connected in parallel with the fuel branch (14) and the second liquid branch (25).

8. A fuel pump system according to one of the preceding claims, **characterised in that** the pump (12) is a piston pump and the pump drive is a cam drive.

## Revendications

1. Système de pompage de carburant permettant d'injecter un carburant dans une chambre de combustion d'un moteur à combustion interne comprenant :
une pompe (12) pouvant être actionnée par un entraînement de pompe qui refoule le carburant, constituant un premier fluide d'injection dans une première branche de circulation de fluide constituant une branche de circulation carburant (14) d'un premier branchement basse pression (16) à un premier branchement haute pression (18),
la pompe (12) étant couplée à une unité de refoulement reliée fluidiquement à une seconde branche de circulation de fluide (25), de sorte qu'elle refoule, dans la seconde branche de circulation de fluide (25) par l'intermédiaire de cette unité de refoulement (20), un second fluide d'injection d'un second branchement basse pression (42) à un second branchement haute pression (44),
l'unité de refoulement (20) comprenant un élément de refoulement (24) qui sépare hermétiquement l'une de l'autre deux chambres de pression (26, 28), une première chambre de pression (26) étant en liaison fluidique avec la branche de circulation de carburant (14) et la seconde chambre de pression (28) étant en liaison fluidique avec la seconde branche de circulation de fluide (25),
l'unité de refoulement (20) étant une unité cylindre-piston équipée d'un piston mobile en translation dans le cylindre (22) le long de l'axe de celui-ci qui sépare l'une de l'autre les deux chambres de pression (26, 28), et
entre la première chambre de pression (26) de l'unité de refoulement (20) et la branche de circulation de carburant (14) étant montée une soupape commutable (30) qui peut sélectivement être reliée au premier branchement haute pression (18) et au premier branchement basse-pression (16).

2. Système de pompage de carburant conforme à la revendication 1,
**caractérisé en ce que**
la soupape (30) est reliée à une unité de commande (32) qui commande sa commutation.

3. Système de pompage de carburant conforme à l'une des revendications précédentes,
**caractérisé en ce que**
la seconde chambre de pression (28) est reliée à la seconde branche de circulation de fluide (25) au niveau d'un branchement (46) situé entre le second branchement haute tension et le second branchement basse tension (44, 42) de la seconde branche de circulation de fluide (25).

4. Système de pompage de carburant conforme à la revendication 3, **caractérisé en ce que**
le branchement (46) est monté entre deux soupapes (48) passantes dans la direction de refoulement.

5. Système de pompage de carburant conforme à l'une des revendications précédentes,
**caractérisé en ce qu'**
il est prévu, dans la seconde chambre de pression (28) un élément de rappel (50) qui sollicite l'élément de refoulement (24) en direction de la première chambre de pression (26).

6. Système de pompage de carburant conforme à l'une des revendications précédentes,
**caractérisé en ce que**
la section de l'élément de refoulement (24) est différente dans la première chambre de pression et dans la seconde chambre de pression (26, 28).

7. Système de pompage de carburant conforme à l'une des revendications précédentes,
**caractérisé en ce que**
plusieurs unités de refoulement (20) branchées en parallèle sont reliées à la branche de circulation de carburant (14) et à la seconde branche de circulation de fluide (25).

8. Système de pompage de carburant conforme à l'une des revendications précédentes,
**caractérisé en ce que**
la pompe (12) est une pompe à piston et l'entraînement de pompe est un entraînement à cames.
